Europäisches Patentamt

European Patent Office

Office européen des brevets

(19)

(11) Veröffentlichungsnummer: **0 183 133**
**B1**

(12) **EUROPÄISCHE PATENTSCHRIFT**

(45) Veröffentlichungstag der Patentschrift: **10.10.90**

(51) Int. Cl.⁵: **H 04 N 1/04**

(21) Anmeldenummer: **85114407.1**

(22) Anmeldetag: **13.11.85**

(54) **Verfahren und Vorrichtung zur Herstellung fotografischer Bilder durch punktweises Aufbelichten.**

(30) Priorität: **24.11.84 DE 3442955**

(43) Veröffentlichungstag der Anmeldung:
**04.06.86 Patentblatt 86/23**

(45) Bekanntmachung des Hinweises auf die
Patenterteilung:
**10.10.90 Patentblatt 90/41**

(84) Benannte Vertragsstaaten:
**CH FR GB IT LI NL**

(56) Entgegenhaltungen:
**FR-A-2 361 027**
**US-A-4 482 919**

(73) Patentinhaber: **Agfa-Gevaert AG
D-5090 Leverkusen 1 (DE)**

(72) Erfinder: **Wagensonner, Eduard, Dipl.-Ing.
Eichenstrasse 1
D-8011 Aschheim (DE)**

EP 0 183 133 B1

**Beschriebung**

Die Erfindung betrifft ein Verfahren und eine Vorrichtung nach dem Oberbegriff des Anspruchs 1.

Kopierverfahren mit punktweiser Aufbelichtung wurden schon verschiedentlich für das Kopieren von Vorlagen vorgeschlagen, weil diese es erlaubt, den Dichteumfang der Volage jeweils entsprechend der Wiedergabefähigkeit des Kopiermaterials zu verändern, d.h. in der Regel, den Dichteumfang zu verringern. Ferner gibt dieses Verfahren die Möglichekeit, sogenannte Bildverbesserung zu betreiben, z.B. Aufsteilen von Kanten.

Trotz dieser Möglichkeiten konnten solche Verfahren im Markt noch keinen Durchbruch erreichen, weil der subjektiv Qualitätseindruck solcher Bilder nicht entsprechende dem Mehraufwand verbessert wurde. Der subjective Qualitätseindruck von Bildern wird nach früheren Untersuchungen (z.B. Dr. Klaus Biedermann "Ermittlung des Zusammenhanges zwischen der subjektiven Güte und den physikalischen Eigenschaften des photographischen Bildes" in "Photographische Korrespondenz", Band 103, S. 5—14, 26—31 und 42—48) wesentlich durch die Schärfe repräsentiert, die am besten durch die Modulationsübertragungsfunktion wiedergegeben werden kann. Gerade die Modulationsübertagungsfunktion von punktweise elektronisch geprinteten Bildern, bei denen z.B. eine Kathodenstrahlröhre als Abbildungselement verwendet wurde, ist — solange man nicht mit unwirtschaftlich hohen Bildpunktzahlen arbeitet — nicht deutlich besser als bei konventionell integral aufbelichteten Bildern mit vergleichbarer Auflösung, weil ein unendlich steiler Schwarzweißsprung der Vorlage wegen der etwa gaußförmigen Helligkeitsverteilung des Lichtstrahles einer CR-Röhre nicht gleich steil wiedergegeben wird. Dies kann auch durch eine praktisch trägheitslose Intensitätssteuerung des Kathodenstrahles nicht erreicht werden.

Ein Kopierverfahren der eingangs beschriebenen Art ist aus der US—A—4,198,154 bekannt. Dort wird ein entsprechend den Helligkeitswerten einer Bildvorlage in seiner Intensität gesteuerter Laserstrahl durch einen rotierenden Polygonspiegel und ein Objektiv auf eine rotierende elektrofotografische Trommel zeilenweise abgelenkt. Der Laserstrahl hat dabei eine von innen nach außen abnehmende Intensitätsverteilung, die zusammen mit der verhältnismäßig steilen Gradation der elektrofotografischen Schicht eine Steuerung der Rasterpunktgröße erlaubt. Die Intensitässteuerung reicht aber nach dort gemachten Angaben zur Wiedergabe einer großen Vorlagendynamik durch Rasterpunktgrößensteuerung nicht aus. Es ist deshalb ein elektrooptischer oder akustooptischer Modulator für den Strahldurchmesser vorgesehen. Die bekannte Strahlablenkung mittels rotierenden Polygonspiegel ist kompliziert wegen der Abstimmung der Bewegung der beiden Rotationskörper aufeinander und wegen der hohen Genauigkeitsanforderungen entsprechend aufwendig.

Aufgabe der Erfindung ist es deshalb, die Strahlablenkung bei dem eingangs beichriebenen Verfahren zu vereinfachen.

Diese Aufgabe wird gelöst durch die im Anspruch 1 beschriebene Erfindung.

Durch die Aufzeichnung des Lichtstrahls einer Kathodenstrahlröhre mit von innen nach außen abnehmender Intensitätsverteilung mittels eines Objektivs auf hartarbeitendes Material werden in der Kopie praktisch nur zwei Schwärzungsstufen erzeugt, nämlich die maximale Dichte und der ungeschwärzte Bereich, weil unter dem Schwellwert des hartarbeitenden Kopiermaterials liegende Kopierlichtmengen bzw. Strahlintensitäten keine Schwärzung herbeiführen. Es werden also auf fotografischem Wege Rasterpunkte erzeugt, deren Durchmesser durch elektronische Mittel so gesteuert ist, daß sie ein tonwertrichtiges Rasterbild ergeben. Die Strahlablenkung erfolgt dabei auf elektronischem Wege mit sehr einfachen Mitteln.

Nach einer Ausgestaltung der Erfindung werden durch Verwendung eines hartarbeitenden Dreischichtfarbmaterials auch Farbrasterbilder mit einem subjektiv ausgezeichneten Schärfeeindruck ermöglicht.

Weitere Ausgestaltugen der Erfindung betreffen eine Vorrichtung zur Durchführung der beanspruchten Verfahren. Weitere Einzelheiten ergeben sich aus der Beschreibung von Ausführungsbeispielen, die anhand von Figuren eingehend erläutert sind. Es zeigen:

Fig. 1 ein Prinzipschaltbild eines Kopiergerätes zur punktweisen Aufbelichtung von Farbbildern mittels einer Kathodenstrahlröhre in mehreren Durchgängen,

Fig. 2 a + b eine Intensitätsverteilung (2a) des Kathoden strahles bzw. von Lichtpunkten auf dem Phosphor bei unterschiedlicher Vorlagenhelligkeit und (2b) die sich daraus ergebenden Rasterpunktgrößen bei einem hart arbeitenden Kopiermaterial mit Ansprechschwelle,

Fig. 3 a – c den Kurvenverlauf von Röhrenkennlinie (3a) und Schwarzungseindruck (3b) eines Rasterbildes unter Einfluß der elektronischen Regelvorrichtung (3c),

Fig. 4a den Belichtungsverlauf in einem Dreischichtfarbmaterial mit Übereinanderbelichtung von Farbrasterpunkten unterschiedlicher Intensität der Farbauszüge und

Fig. 4b die sich daraus ergebende Farbrasterpunktgröße,

Fig. 5 ein Farbdiagramm zur Bestimmung der Farbe von mehrfarbig belichteten Mittelbereichen von Farbrasterpunkten gemäß Fig. 4 und

Fig. 6 den Verlauf der Ablenkspannung für die Horizontalablenkung einer Kathodenstrahlröhre mit drei aufeinander folgenden Farbbelichtungen entsprechend den unterschiedlichen Farbauszügen für in der Zeile nebeneinander liegende Farbrasterpunkte.

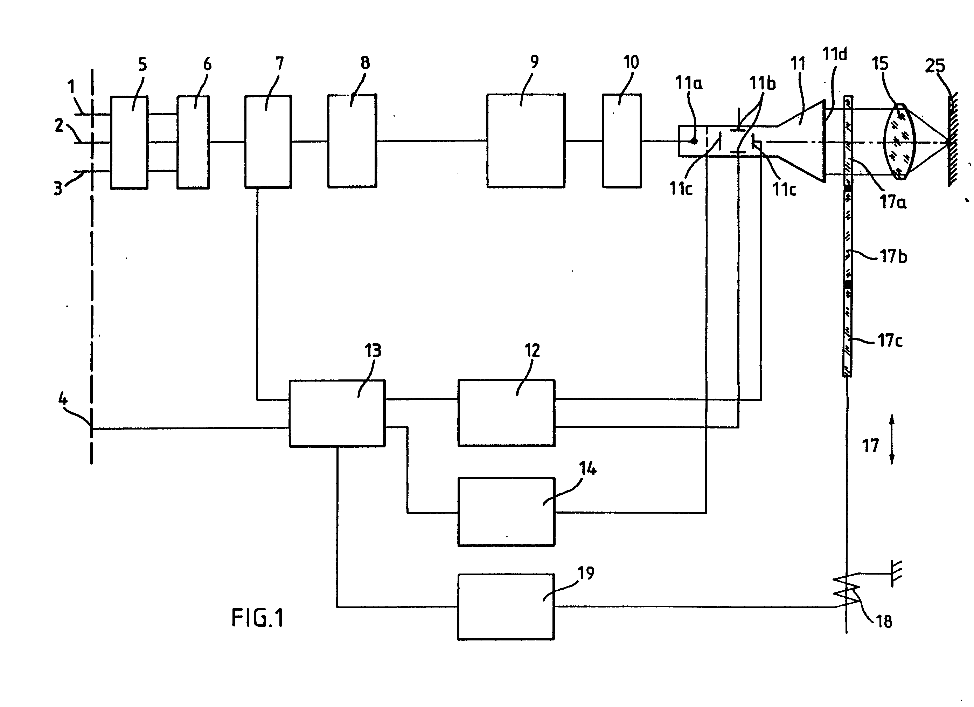

Fig. 1 zeigt ein Prinzipschaltbild eines Kopiergerätes zur punktweisen Aufbelichtung einer farbigen, nicht gezeigten Vorlage mittels einer Kathodenstrahlröhre. In der Figur erfolgt der funktionelle Ablauf von links nach rechts. Der mechanische Aufbau von Abtast- und Belichtungseinrichtung kann z.B. in bekannter, nicht gezeigter Weise zwei nebeneinander angeordnete Aufspannvorrichtungen umfassen, eine für die Vorlage und eine für das Kopiermaterial. Der Abtaststrahl z.B. einer Kathodenstrahlröhre wird durch nacheinander in den Strahlengang gebrachte Farbfilter je einmal über die Vorlage geführt. Die vom Fotoempfänger gelieferten Farbintensitätssignale kommen über die Leitungen 1, 2 und 3. Der vierte Eingang 4 bezieht sich auf ein Synchronsignal, das ebenfalls während der Abtastung der Vorlage anfällt. Durch die Leitungen 1, 2, 3 folgen nacheinander die Signale für die Farbdichtewerte aller Punkte der Vorlage, die über eine Farbmatrix 5 und einen Analog-Digital-Konverter 6 in einen Bildpunktspeicher 7 für die drei Farbauszugsignale eingeschrieben werden. Der Bildpunktspeicher 7 steht in Verbindung mit einer Schaltung 8 zur Bildverbesserung, z.B. zur Kantenaufsteilung, nach der Lehre z.B. der veröffentlichten PCT-Anmeldung GB 79/00159. Der Bildspeicher 7 steht außerdem in Verbindung mit einer zentralen Steuerung 13, der auch die Synchronimpulse vom Eingang 4 zugeführt werden.

Hinter der Schaltung 8 zur Bildverbesserung gelangen die Helligkeitssignale zu einer Schaltung 9, die die Anpassung der Helligkeitssignale an die Schwärzungskennlinie des Kopiermaterials unter Berücksichtigung der gewünschten Rasterpunktgröße und der Röhrenkennlinie vornimmt. Danach folgt ein Digital-Analog-Konverter 10, der mit der Kathode der Kathodenstrahlröhre 11 verbunden ist. Die Ausgangsspannung des Digital-Analog-Wandlers beeinflußt direkt die Helligkeit des Strahls von der Kathode 11a. Die Strahlröhre 11 enthält weiter Elektroden 11b und 11c für die Horizontal- und Vertikalablenkung, wobei die Steuerspannungen von einem Steuergerät 12 geliefert werden, das mit der zentralen Steuerung 13 verbunde ist. Im Prinzip reicht die Dynamik der Helligkeitssteuerung aus zur Steuerung der Kopierlichtmenge für ein Papier mit einer Dynamik von 1:100. Die zentrale Steuerung liefert außerdem über einen Belichtungszeitgeber 14 die Möglichkeit, die Belichtungszeit durch die Anzahl der pro Farbauszug geschriebenen Vollbilder zu variieren.

Der Bildschirm 11d der Röhre 11 wird durch ein Objektiv 15 scharf abgebildet auf ein lichtempfindliches Material 16, dessen Eigenschaften im folgenden noch eingehend beschrieben werden. Zwischen dem Schirm 11d und dem Objektiv 15 befindet sich eine Führung für einen Filterschieber 17, der ein rotes Feld 17a, ein grünes Feld 17b und ein blaues Feld 17c aufweist. Der Schieber 17 ist gesteuert durch einen Magnet- oder vergleichbaren Antrieb 18, der über eine Steuerung 19 gesteuert ist.

Die Filtersteuerung 19 ist wiederum mit der zentralen Steuerung 13 verbunden, derart, daß z.B. nach der Aufzeichnung des roten Bildes durch das Rotfilter 17a in einem oder mehren Durchläufen des Grünfilter 17b in den Strahlengang gebracht wird und von neuem sämtliche Bildpunkte über die zentrale Steuerung 13 angesteuert werden. Für den dritten Farbauszug, das blaue Bild, wird dann das Blaufilter 17c in den Strahlengang gebracht. Mit dem Vorlagenwechsel bringt die Filtersteuerung 19 über den Antrieb 18 wiederum das erste, das rote Filter 17a in den Strahlengang.

Die Wirkungsweise bzw. Zielsetzung der einzelnen Komponenten wird nun anhand der weiteren Figuren erläutert.

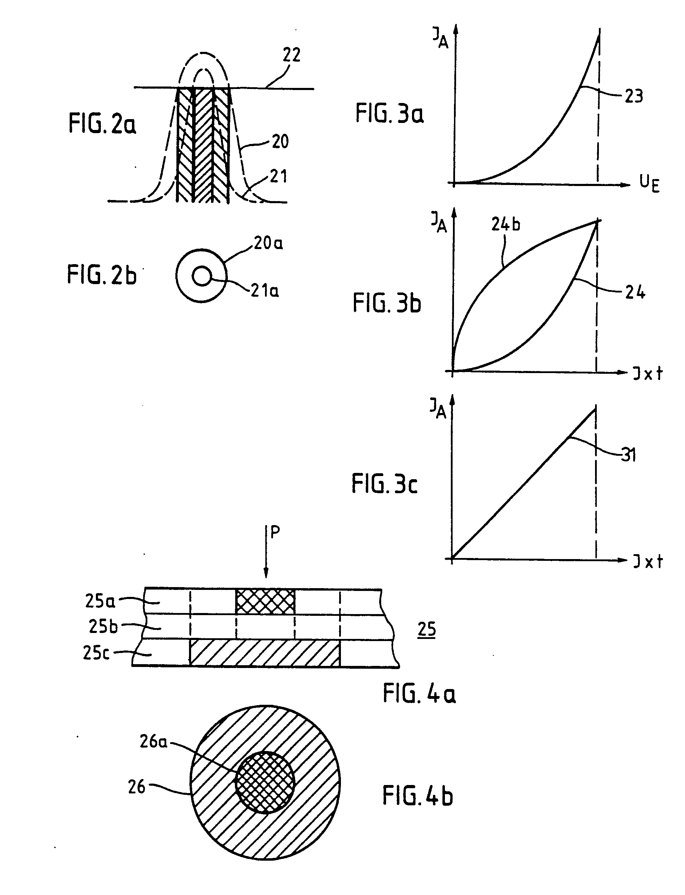

In Fig. 2a und 2b ist dargestellt, wie für verschiedene Intensitäten des Schreibstrahles sich unterschiedliche Rasterpunktgrößen ergeben. Dies ist zunächst dargestellt für einen Rasterpunkt einer einzigen Farbe, z.B. für einen schwarzen Rasterpunkt. Dasselbe gilt jedoch auch für den Farbauszug eines Rasterpunktes in einer der drei Farben. In Fig. 2a ist dargestellt durch den Kurvenzug 20 der Intensitätsverlauf in einem Schreibstrahl längs einer durch die Strahlachse gehenden Schnittebene bzw. in dem Lichtpunkt auf dem Schirm der Kathodenstrahlröhre. Der Schreibstrahl ist natürlich im wesentlichen rotationssymmetrisch. Die Abnahme der Intensität von der Achse nach außen folgt im wesentlichen einer Gauß'schen Kurve. Der Kurvenzug 20 steht z.B. für die Intensität eines mittelhellen Punktes. Der Kurvenzug 21 eines deutlich weniger hellen Punktes verläuft annähernd parallel, d.h., seine Spitze liegt etwa so weit unter dem Maximum der Kurve 20 wie auch die Flanken der beiden Kurven voneinander entfernt sind.

Die horizontale Linie 22 kennzeichnet eine zunächst zum besseren Verständnis geradlinig angenommene Papieransprechschwelle. Dies bedeutet, daß sich die Schwärzung des Kopiermaterials mit zunehmender Kopierlichtmenge an der Schwelle 22 sprunghaft verändert. Bis zu dieser Grenzlichtmenge zeigt das Kopiermaterial nach der Entwicklung keinerlei Schwärzung, jedoch oberhalb dieser Kopierlichtmenge eine maximale Schwärzung. Kopiermaterialien mit einem an diesen idealisierten Verlauf stark angenäherten Verlauf existieren z.B. in Schwarzweiß für die Drucktechnik mit dem sogenannten Lith-Material, dessen γ > 8 ist. Ein solcher sprunghafter Verlauf der Schwärzungskurve kann jedoch auch durch andere Schichtmaterialien bzw. Aufzeichnungsverfahren realisiert sein, wie z.B. elektrofotografische Verfahren, Tintenspritzen, Thermographie oder Silbersalzdiffusionsverfahren.

Aus der darunter dargestellten Fig. 2b ist zu entnehmen, welche Rasterpunktgrößen bzw. Durchmesser der Punkte sich bei einem gegebenen Verlauf der Intensitätskurve, einer bestimmten Belichtungszeit und einer bestimmten Papieransprechschwelle ergeben. Daraus ist bereits zu entnehmen, daß die Fläche eines Rasterpunktes, die für den subjetiven Schwärzungseindruck eines Rasterbildes ausschalggebend ist, nicht linear von dem Strahldurchmesser über der Ansprechschwelle des Materials 22 abhängt, sondern etwa eine quadratische Funktion bildet. Der Kreis 20a gibt den Rasterpunkt bei einem Intensitätsverlauf entsprechend der Kurve 20 wieder, während der Kreis 21a die Rasterpunktgröße für den Strahl mit Intensitätsverlauf längs der Kurve 21 zeigt.

In Fig. 3 ist nun der Zusammenhang zwischen den Kenndazen des Erzeugers des Schreibstrahles und dem Schwärzungseindruck der Kopie dargestellt.

Auf der Abszisse des Diagramms in Fig. 3a ist aufgetragen die Eingangsspannung $U_E$ bei einer Kathodenstrahlröhre und nach oben ist aufgetragen die dabei erzielte Strahlintensität $J_A$. Die Kurve 23 gibt dabei die sogenannte Röhrenkennlinie wieder, die bei einer Kathodenstrahlröhre die maximale oder mittlere Intensität des Strahles in der Strahlachse in Abhängigkeit von der Eingangsspannung an der Kathode 11a wiedergibt. Für jeden Röhrentyp werden vom Hersteller solche Röhrenkennlinien angegeben.

Die Kurve 24 im Diagramm 3b gibt den integrierten Dichteeindruck (bzw. die Schwärzungskennlinie) aufgrund der Rasterpunktgröße in Abhängigkeit von dem Durchmesser 20a bzw. 21a nach Fig. 2b und damit von der Eingangsspannung an der Kathode 11a (Negativmaterial) wieden. Der Schwärzungseindruck steigt wegen des quadratischen Einflusses des Punktdurchmessers auf den geschwärzten Anteil sehr langsam an und geht dann steil in die Sättigung über. Die Kurve 24b in Fig. 3b zeigt den Schwärzungseindruck bei einem Positiv- oder Umkehrmaterial, das im unbelichteten Bereich schwarz und im Bereich der Rasterpunkte ungeschwärzt ist. Es ergibt sich dann der Kurvenverlauf 24b mit einem steilen Anstieg am Anfang und einem flacheren Anstieg zur Sättigung hin. In dem Schaltungsteil 9, der sogenennten Gamma-Anpassung des Schaltbildes von Fig. 1, ist nun die entsprechende Übertragungsfunktion implementiert, die erforderlioch ist, um — abhängig von der Kombination Röhren- (Fig. 3a) und Schwärzungskennlinie (Fig. 3b) des Fotomaterials (wiederum abhängig, ob Positiv- oder Negativmaterial zugrundegelegt wird), eine vorgegebene idealisierte Reproduktionskennlinie 25 gemäß Fig. 3c zu erreichen. Im gezeigten Ausführungsbeispiel ist es eine Gerade, die bei einem Schwärzungsverlauf gemäß Kurve 24b mit geringerem Aufwand erreichbar ist als bei der Kurve 24.

Die Einrichtung gemäß Fig. 1 kann mit gewissen Vereinfachungen unmittelbar auch zum Kopieren von Schwarzweißvorlagen verwendet werden. In diesem Fall verringert sich die Zahl der Eingänge 1 bis 3 eine einzige Leitung für das Helligkeitssignal und der Filterschieber 17 mit Antrieb 18 und Steuerung 19 kann entfallen. Ein für die Vergrößerung von Schwarzweißvorlagen geeignetes Material ist z.B. der aus der grafischen Technik bekannte Lith-Film mit einem $\gamma > 8$. Dieser Film erfüllt in etwa die aus Fig. 2a ersichtliche Forderung einer Ansprechschwelle, unterhalb der überhaupt keine Schwärzung und oberhalb der maximale Schwärzung eintritt. Dieser Film kennt deshalb praktisch nur zwei Schwärzungsstufen. Dieses Verhalten des Kopiermaterials wird zusätzlich unterstützt durch eine Entwicklung auf maximale Schwärzung, d.h., die Einwirkzeit des Entwicklers wird so bestimmt, daß alle Bereiche des Kopiermaterials, deren Kopierlichtmenge oberhalb der Ansprechschwelle liegt, auch auf maximale Schwärzung enwickelt werden. Aufgrund des Schwärzungsverhalten dieses Materials ist eine solche Entwicklung in relativ weiten Grenzen von Temperatur und Verweilzeit unabhängig, ohne daß Bereiche des Kopiermaterials mit unterhalb der Ansprechschwelle liegender Kopierlichtmenge eine Schwärzung erhalten. Die chemische Behandlung eines so belichteten Materials ist deshalb mit geringem Aufwand zu kontrollieren.

Das z.B. durch die Leitung 2 gelieferte Helligkeitssignal einer Schwarzweißvorlage wird nach AD-Wandlung in dem Baustein 6 in den Bildspeicher 7 eingeschrieben. Dort wird z.B. durch Maximum-Minimum-Bestimmung der Dichteumfang der Vorlage bestimmt und festgelegt, welche Vorlagendichtewerte auf die maximale Punktrastergröße und welche Dichtewerte auf die minimale Punktrastergröße einzustellen sind. Der dazwischen liegende Bereich wird durch den Baustein 9, Gamma-Anpassung, unter Berücksichtigung der Röhrenkennlinie 23 und der Kennlinie 24 für die integrierte Dichte- oder den individuellen Schwärzungseindruck Punkt für Punkt so verändert, daß die dabei auf dem Schichtträger 16 erzielte Rasterpunktegröße gerade ein tonwertrichtiges Bild ergibt. Da praktisch nur zwei Dichtewerte auftreten, nämlich geschwärzt und nichtgeschwärzt, werden ultrasteile Punktkanten erzielt, die ein Spektrum mit hohen Ortsfrequenzen erzeugen. Diese hohen Ortsfrequenzen registriert jedoch das menschliche Auge als erhöhte Schärfe, selbst dann, wenn das Raster nach Punkten pro Millimeter nicht besonders fein ist. In der Regel tritt bereits bei 5 bis 6 Bildpunkten pro Millimeter der Eindruck eines hoch aufgelösten, sehr scharfen Bildes ein. Die punktweise Belichtung erlaubt daneben die üblichen Maßnahmen zur Bildverbesserung wie zusätzliche Kantenverschärfung, Anpassung des Kopiedichteumfangs an den Dichteumfang der Vorlage und im Falle ces Farbkopierens Farbsättigungserhöhung.

Das vorgeschlagene Verfahren ist nicht nur für das Kopieren von Schwarzweißvorlagen anwendbar, sondern auch für Farbvorlagen. In diesem Fall ist als Kopiermaterial ein Dreischicht-Farbkopiermaterial mit drei sehr hart arbeitenden Schichten vorgesehen. Auch hier gilt, daß das $\gamma$ jeder Schicht einen gewissen Mincestwert von etwa 2,5 erreichen muß. Für das punktweise Au belichten von Farbinformation sind allerdings noch einige zusätzliche Bedingungen zu erfüllen. Diese werden anhand der Fig. 4, 5 und 6 im Zusammenhang mit dem vollständigen Schaltbild nach Fig. 1 noch erläutert.

Die Fig. 4 zeigt die Belichtung eines Farbkopiermaterials 25 mit einer blau sensibilisierten obersten Emulssionsschicht 25a, einer grün sensibilisierten mittleren Schicht 25b und einer rot sensibilisierten unteren Schicht 25c. Die drei Farbauszüge eines Rasterbildpunktes werden dabei als konzentrische Kreise aufbelichtet. Für jede einzelne der drei Farbschichten bzw. drei Strahldurchmesser gilt dabei die Figur 2a, 2b, d.h., die Intensität des Schreibstrahles legt das Profil 20 des jeweiligen Schreibstrahles durch das zugehörige Farbfilter 17a, b oder c fest und bestimmt damit aufgrund der Lage der Papieransprechschwelle auch den Durchmesser des zugehörigen Rasterfarbbildpunktes. In dem in Fig. 4 gezeigten Ausführungsbeispiel ist z.B. der Durchmesser des Rasterbildpunktes in blau in der obersten Schicht 25a deutlich kleiner als der Durchmesser des Rasterbildpunktes in der rotempfindlichen Schicht 25c. Nachdem das Signal des Grünauszuges unterhalb der Ansprechschwelle der Grünschicht liegt, vereinfacht sich für diesen Fall die Darstellung auf das Bild gemäß Fig. 4b. Dort ist die Ringfläche des Rasterbildpunktes 26 zwischen dem dem Blaupunkt entsprechenden Kreis 26a und der äußeren Begrenzung des Bildpunktes rot. Diese Ringzone ist flächenmäßig weitaus größer als die innere Fläche 26a, so daß dieser Bildpunkt beim Betrachter überweigend einen roten Eindruck hinterläßt.

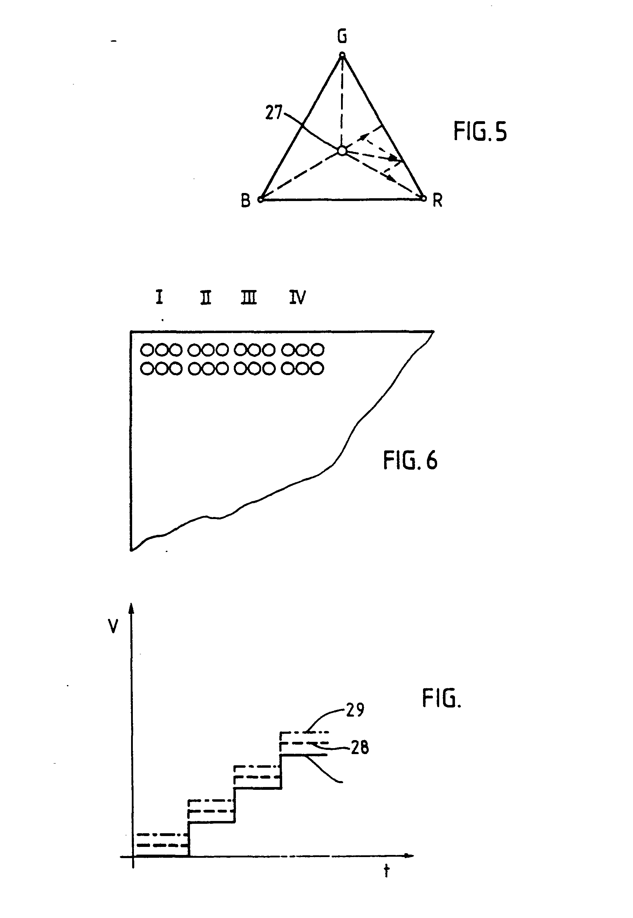

Der Farbeindruck für die Innenfläche 26a ergibt sich aus dem Diagramm nach Fig. 5. Dieses im wesentlichen als gleichseitiges Dreieck aufgebaute Diagramm hat drei Eckpunkte, von denen der linke untere der Farbe blau zugeordnet ist, der rechte untere der Farbe rot und der obere Eckpunkt der Farbe grün. Der Schwerpunkt dieses Dreiecks, d.h. der Schnittpunkt der Winkelhalbierenrenden, bezeichnet mit dem Bezugszeichen 27, markiert den sogenannten Weißpunkt. Ein dort symbolisierter Punkt ist sozusagen farblos. Werden nun die Belichtungen in den verschiedenen Farben mit der zugeordneten erreichbaren, maximalen Sättigung als Vektoren, ausgehend von dem Weißpunkt, eingezeichnet, so läßt sich für jeden Punkt mit mehrfacher Belichtung die resultierende Farbe als resultierender Vektor angeben. Prinzipiell kann jede Farbart des Dreiecks mit zwei Farbvektoren erreicht werden. Die dritte Farbe erzeugt nur schwarz.

Ein mit zwei Teilstrahlen unterschiedlicher Intensität und Farbe aufbelichteter Farbrasterpunkt läßt sich deshalb in seiner Gesamtfarbwirkung zurückführen auf den Farbeindruck der Ringzone, und einer Kreiszone mit der Überlagerung der beiden Farben in der Mitte. Es kommen bei einem Bildpunkt also zwei Farbmischungen zustande. Eine durch übereinander liegende Farbschichten und eine zweite geometrische mit der größeren Kreisringfläche außerhalb des Überdeckungsbereiches. Für das Auge entsteht dann ein integrierter Farbeindruck. Die dafür erforderlichen Farbmischkennlinien werden in einer als Farbmatrix 5 bezeichneten Stufe der Schaltung gemäß Fig. 1 erzeugt. Wegen der Natur des Kopiermaterials, daß jeweils nur maximale Schwärzungen in jede der drei Farbschichten auftreten, ist die Eichung des Kopiergerätes zur Anpassung an die Eigenschaften dieses Kopiermaterials jedoch nicht so schwierig, weil mit festen Schwellwerten gerechnet werden kann.

Eine vom Prinzip her einfachere Farbsteuerung ist jedoch möglich, wenn jeder Rasterbildpunkt aufgelöst wird zu einem Tripel, d.h., zu drei nebeneinander angeordneten Farbpunkten, die sich nicht überlappen und nur geometrisch durch das Auge des Betrachters gemischt werden. Eine solche Aufbelichtung ist bei entsprechende feiner Rasterung ohne wesentlichen Verlust an Bildschärfe realisierbar, wenn z.B. drei aufeinanderfolgende Punkte einer Zeile gemäß Fig. 6a als einziger Rasterpunkt betrachtet werden und die drei Farbauszüge eines Punktes nebeneinander aufbelichtet werden. Weben der verhältnismäßig langsamen Steuerung der Farbfilter 17 sind die Farbauszüge einer Farbe für ein Bild jeweils vollständig aufzuzeichnen.

In Fig. 6b ist in einem Diagramm gezeigt, wie die zugehörige Steuerspannung an den Ablenkelektroden für die Horizontalablenkung von der Belichtung eines Farbauszuges zum nächsten um jeweils ein Drittel des Abstandes zweier Rasterbildpunkte nach oben verschoben ist. Die Größe der Rasterbildpunkte in den einzelnen Farben ist dann außerdem so festzulegen, daß keine Überlappung eintritt. In einem ersten Belichtungsdurchgang, z.B. für die rote Schicht durch das Filter 17a, wird die Ablenkspannung für die Horizontalablenkung gemäß der Treppenkurve 27 in Fig. 6 gesteuert. Nach Aufzeichnung des roten Farbaufzuges und Fortschaltung des Filterschiebers 17 um eine Teilung wird z.B. der nächste Farbauszug mit einer Ablenkspannung gemäß der Treppenkurve 28 aufbleichtet, während nach einem weiteren Fortschalten des Filterschiebers 17 die Ablenkspannung für diesen Farbauszug längs der Treppenkurve 29 geführt wird. Die Einzelfarbpunkte können durch entsprechend gesteuerte Strahlablenkung auch auf den Ecken eines gleichseitigen Dreiecks liegen.

Die genaue Kopierlichtmenge pro Rasterbildpunkt wird ja festgelegt durch Intensität mal Belichtungsdauer. Um deutlich vereinzelte Raster-punkte zu erhalten, ist eine Steuerung des Kathodenstroms von Punkt zu Punkt mit Zwischenabsenkung erforderlich. Die Belichtungsdauer pro Punkt ist konstant zu halten, weil die Unterschiede in der Rasterpunktgröße über die Intensität genügend Abstufungsmöglichkeit geben.

Die Belichtungsintensitäten in den einzelnen Farben sind, abhängig von Materialempfindlichkeit und Emission des Phosphors, in den verschiedenen Farben stark unterschiedlich. Es kann deshalb zweckmäßig sein, den Transmissionsgrad der Filter unterschiedlich zu machen, um ausgewogene Belichtungen in den einzelnen Farben zu erreichen.

Unabhängig von der Art der Belichtung der Rasterbildpunkte, ob übereinander gemäß Fig. 4 oder nebeneinander gemäß Fig. 6a erfolgt die Entwicklung des Farbkopiermaterials wiederum auf maximale Dichte. Durch Erreichen dieser maximalen Dichtewerte ist auch der subjective Farbeindruck dann an die voraus berechenten Werte agepaßt.

**Patentansprüche**

1. Verfahren zur Herstellung fotografischer Halbtonbilder durch punktweises Aufbelichten auf ein hartarbeitendes lichtempfindliches Material mittels eine Lichtstrahles mit einer von innen nach außen abnehmenden Intensitätsverteilung, dessen Durchmesser durch Intensitätssteuerung entsprechend den gemessenen oder gespeicherten Helligkeitswerten einer Bildvorlage zur Erzeugung eines tonwertrichtigen Rasterbildes gesteuert wird, dadurch gekennzeichnet, daß der Lichtstrahl von einer Kathodenstrahlröhre erzeugt wird, deren Schirm von einem Objektiv auf das lichtempfindliche Material scharf abgebildet wird.

2. Verfahren nach Anspruch 1, dadurch gekennzeichnet, daß als hartarbeitendes Kopiermaterial ein Material mit γ >2,5 verwendet wird, das auf maximale Dichte entwickelt wird.

3. Verfahren nach Anspruch 1, dadurch gekennzeichnet, daß als Kopiermaterial ein Positivmaterial verwendet wird.

4. Verfahren nach Anspruch 1, dadurch gekennzeichnet, daß das Aufzeichnungsmaterial ein hartarbeitendes lichtempfindliches elektrostatisches Material, gegebenenfalls als Zwischenaufzeichnungsträger, ist.

5. Verfahren nach einem der vorangehenden Ansprüche, dadurch gekennzeichnet, daß zur Wiedergabe mehrfarbiger Vorlagen ein hartarbeitendes fotografisches Dreischichtmaterial verwendet wird, dessen Schichten in den einzelnen Farben sensibilisiert sind und daß durch entsprechende Farbfilter hindurch nacheinander drei Farbauszüge punktweise aufbelichtet werden.

6. Verfahren nach Anspruch 5, dadurch gekennzeichnet, daß die drei Farbauszüge eines Punktes konzentrisch übereinander belichtet werden und bei der Bestimmung der Intensität des Schreibstrahles für die Punktfarbauszüge aller Farben die Farbanteile in den mehrfach belichteten Punktmitten berücksichtigt werden.

7. Verfahren nach Anspruch 5, dadurch gekennzeichnet, daß die drei Farbauszüge eines Punktes durch elektronisch gesteuerten Strahlversatz in einer Linie oder in Form eines gleichseitigen Dreiecks nebeneinander aufbelichtet werden.

8. Vorrichtung zur Durchführung des Verfahrens nach Anspruch 5, dadurch gekennzeichnet, daß zur Steuerung der Intensität der Puntfarbauszüge ein Verstärker (9) vorgesehen ist, der den Einfluß der Farbverteilung des Leuchtens des Röhrenphosphors (11a), das γ der Schicht auf die Punktgröße und die gegenseitige Beeinflussung der Farben im Überlagerungsbereich (26a) berücksichtigt.

9. Vorrichtung zur Durchführung des Verfahrens nach Anspruch 7, dadurch gekennzeichnet, daß das Ablenksignal (27, 28, 29) der Kathodenstrahlröhre von Farbauszug zu Farbauszug eines Bildes jeweils um einen dem Teil eines Punktabstandes entsprechenden Betrag erhöht wird.

10. Vorrichtung nach Anspruch 8 oder 9, dadurch gekennzeichnet, daß eine Filtersteuerung (17, 18, 19) vorgesehen ist, die je nach Ende einer Aufbelichtung einen Wechsel der Farbfilter (17a, 17b, 17c) veranlaßt.

11. Kopiermaterial zur Durchführung des Verfahrens nach Anspruch 5, gekennzeichnet, durch eine rotempfindliche Silberhalogenidemulsionsschicht, eine grünempfindliche Silberhalogenidemulsionsschicht und eine blauempfindliche Silberhalogenidemulsionsschicht und gegebenenfalls weitere fotografische Schichten, wobei die lichtempfindlichen Schichten jeweils einen γ-Wert von mindestens 2,5 besitzen.

**Revendications**

1. Procédé de fabrication d'images photographiques tramées par exposition à la lumière par point, sur un matériau support sensible à la lumière et donnant une image contrastée, au moyen d'un faisceau lumineux qui présente une distribution d'intensité décroissante de l'intérieur vers l'extérieur et dont le diamètre est commandé par un circuit de commande de l'intensité en fonction des valeurs de la luminosité, mesurée ou mémorisée, d'un original, pour donner une image tramée de tonalité correcte, caractérisé en ce que le faisceau lumineux est produit par un tube à faisceau cathodique dont un objectif donne une image nette de l'écran sur le matériau support sensible à la lumière.

2. Procédé selon la revendication 1, caractérisé par le fait que comme matériau support de la copie donnant une image contrastée, on emploie un matériau à γ >2,5, que l'on développe pour avoir la densité de coloration maximale.

3. Procédé selon la revendication 1, caractérisé par le fait que comme matériau support de la copie on emploie un matériau à tirage positif.

4. Procédé selon la revendication 1, caractérisé par le fait que le matériau d'enregistrement est un matériau électrostatique, sensible à la lumière, donnant une image contrastée, éventuellement comme support d'enregistrement intermédiaire.

5. Procédé selon l'une des revendications précédentes, caractérisé par le fait que pour reproduire des documents en plusieurs couleurs, on emploie un matériau photographique à trois couches, donnant une image contrastée, dont les couches sont sensible aux différentes couleurs et par le fait qu'en traversant des filtres couleur, appropriés, on expose successivement à la lumière, par points, trois sélections de couleur.

6. Procédé selon la revendication 5, caractérisé par le fait que les trois sélections de couleur d'un point sont exposées à la lumière concentriquement l'une au-dessus de l'autre et que pour déterminer l'intensité du faisceau pour les sélections de toutes les couleurs point à point on prend en compte les proportions de couleur aux centres du point exposés plusieurs fois.

7. Procédé selon la revendication 5, caractérisé par le fait que les trois sélections couleur d'un point sont exposées à la lumière l'une à côté de l'autre grâce à un décalage du faisceau à commande électronique sur une ligne ou sous forme d'un triangle équilatéral.

8. Dispositif pour l'application du procédé selon la revendication 5, caractérisé par le fait que pour le pilotage de l'intensité es sélections couleur d'un point, il est prévu un amplificateur (9) qui prend en compte l'influence de la distribution, selon les couleurs, de la luminescence du produit luminescent (11a) du tube, ainsi que le γ de la couche sur la dimension du point, ainsi que l'influence mutuelle des couleurs dans la zone de recouvrement (26a).

9. Dispositif pour l'application du procédé selon la revendication 7, caractérisé par le fait que le signal de déviation (27, 28, 29) du tube à faisceau cathodique croît, d'une sélection de couleur à l'autre d'une image, chaque fois d'une valeur correspondant à une partie de la distance entre les points.

10. Procédé selon la revendication 8 ou 9, caractérisé par le fait qu'il est prévu une unité de commande du filtre (17, 18, 19) qui, à la fin de chaque exposition à la lumière, provoque un changement du filtre couleur (17a, 17b, 17c).

11. Matériau support de copie pour l'application du procédé selon la revendication 5, caractérisé par une couche d'émulsion d'halogénure d'argent sensible au rouge, par une couche d'émulsion d'halogénure d'argent sensible au vert, et par une couche d'halogénure d'argent sensible au bleu, et éventuellement par d'autres couches photographiques, étant précisé que les couches sensibles à la lumière présentent chacune une valeur γ d'au moins 2,5.

## Claims

1. A method of producing photographic halftone images by dot-wise exposure onto a heavy-duty photo-sensitive material by means of a beam of light having an intensity distribution which decreases from the interior outward and of which the diameter is controlled by intensity control according to the measured or stored brightness values of an original picture for generating a grid pattern which is true in tone value, characterised in that the light beam is generated by a cathode ray tube of which the screen is focused sharply onto the photo-sensitive material by a lens.

2. A method according to claim 1, characterised in that a material wherein $\gamma > 2.5$, which is developed to maximum density, is used as heavy-duty copy material.

3. A method according to claim 1, characterised in that a positive material is used as copy material.

4. A method according to claim 1, characterised in that the recording material is a heavy-duty photo-sensitive electrostatic material, optionally as intermediate recording medium.

5. A method acording to one of the preceding claims, characterised in that, for reproducing multi-coloured originals, a heavy-duty three-layered photographic material is used, of which the layers are sensitized in the individual colours, and in that three colour separations are exposed dot-wise in succession through corresponding colour filters.

6. A method according to claim 5, characterised in that the three colour separations of a dot are exposed concentrically on top of one another and, when determining the intensity of the recording beam for the dot colour separations of all colours, the colour contents in the multiply exposed dot centres are taken into consideration.

7. A method according to claim 5, characterised in that the three colour separations of a dot are exposed next to one another in a line or in the form of an equilateral triangle by electronically controlled beam shifting.

8. Apparatus for carrying out the method according to claim 5, characterised in that, for controlling the intensity of the dot colour separations, an amplifier (9) is provided which takes into consideration the influence of the colour distribution of the luminescence of the tube phosphor (11a), the γ of the layer on the dot size and the mutual influence of the colours in the overlay region (26a).

9. Apparatus for carrying out the method according to claim 7, characterised in that the deflection signal (27, 28, 29) of the cathode ray tube is increased from colour separation to colour separation of an image by an amount corresponding to the part of a dot interval in each case.

10. Apparatus according to claim 8 or 9, characterised in that a filter control means (17, 18, 19) is provided which brings about an exchange of the colour filters (17a, 17b, 17c) after the end of each exposure.

11. Copy material for carrying out the method according to claim 5, characterised by a red-sensitive silver halide emulsion layer, a green-sensitive silver halide emulsion layer and a blue-sensitive silver halide emulsion layer and optionally further photographic layers, the photo-sensitive layers having a γ-value of at least 2.5 in each case.

FIG.1

EP 0 183 133 B1

FIG.2a

22

20

21

FIG.2b

20a

21a

FIG.3a

$J_A$

23

$U_E$

FIG.3b

$J_A$

24b

24

$J \times t$

FIG.3c

$J_A$

31

$J \times t$

P

25a

25b

25c

25

FIG.4a

26a

26

FIG.4b

G

27

B                    R

FIG.5

I    II   III   IV

FIG.6

V

29

28

t

FIG.